(19) Europäisches Patentamt
European Patent Office
Office européen des brevets

(11) EP 3 674 331 A1

(12) EUROPEAN PATENT APPLICATION

(43) Date of publication:
**01.07.2020 Bulletin 2020/27**

(51) Int Cl.:
***C08F 110/06*** (2006.01)

(21) Application number: **19216630.4**

(22) Date of filing: **16.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018245034**
**04.10.2019 JP 2019183920**

(71) Applicant: **SUMITOMO CHEMICAL COMPANY, LIMITED**
**Chuo-ku,**
**Tokyo 104-8260 (JP)**

(72) Inventors:
- **NIWA, Yasuhito**
**Chiba, 299-0195 (JP)**
- **INOUE, Nao**
**Chiba, 299-0195 (JP)**
- **YASUNAGA, Tomokazu**
**Ehime, 792-8521 (JP)**
- **UEMURA, Makoto**
**Tokyo, 104-8260 (JP)**
- **YAMADA, Hidekazu**
**Chiba, 299-0195 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

# (54) OLEFIN POLYMER AND METHOD FOR PRODUCING OLEFIN POLYMER

(57) An olefin polymer according to the present invention comprises a monomer unit derived from propylene and satisfies all of the following requirements (1) to (3).
(1) $0.5 \leq MFR \leq 7$ wherein the MFR represents a melt flow rate measured at 230°C and 21.18 N, and a unit thereof is g/10 min.
(2) $5.0 \leq Aw/An \leq 10.0$ wherein Aw and An represent a weight average molecular chain length and a number average molecular chain length, respectively, each measured by gel permeation chromatography.
(3) $SR \geq 0.1 \cdot \log(MFR) + 1.26$ wherein the SR is defined as follows assuming that a diameter of a die hole is Dh, and a diameter of a section of the olefin polymer extruded from the die hole is Dp in measurement of the MFR, SR = Dp/Dh.



Printed by Jouve, 75001 PARIS (FR)

## Description

### TECHNICAL FIELD

The present invention relates to an olefin polymer and a method for producing an olefin polymer.

### BACKGROUND

In the past, a technique of producing a microporous film by stretching a film containing an olefin polymer as a main component has been known.

### Citation List

### Patent Literature

Patent Literature 1 WO2014/065331

### SUMMARY

However, in the conventional film containing an olefin polymer as a main component, stretching properties such as porosity after stretching, uniformity of stretching, and heat shrinkage ratio after stretching are not sufficient in some cases.

The present invention has been completed in view of the problems, and an object of the present invention is to provide an olefin polymer having excellent stretching properties, and a method for producing an olefin polymer.

An olefin polymer according to the present invention comprises a monomer unit derived from propylene, and satisfies all of the following requirements (1) to (3).

$$(1)\ 0.5 \leq \mathrm{MFR} \leq 7$$

wherein the MFR represents a melt flow rate measured at 230°C and 21.18 N, and a unit thereof is g/10 min.

$$(2)\ 5.0 \leq \mathrm{Aw/An} \leq 10.0$$

wherein Aw and An represent a weight average molecular chain length and a number average molecular chain length, respectively, each measured by gel permeation chromatography.

$$(3)\ \mathrm{SR} \geq 0.1 \cdot \log(\mathrm{MFR}) + 1.26$$

wherein the SR is defined as follows assuming that a diameter of a die hole is Dh, and a diameter of a section of the olefin polymer extruded from the die hole is Dp in measurement of the MFR.

$$\mathrm{SR} = \mathrm{Dp/Dh}$$

The olefin polymer herein can further satisfy a requirement (4).
(4) An isotactic pentad fraction is 93% or more.

In addition, the olefin polymer can be such that an amount of heat absorbed within a temperature range of 160 to 180°C, the amount measured with a differential scanning calorimeter, is 55 J/g or more, and
a half-value width in a melting endotherm curve within a temperature range of 100°C to 180°C is 8°C or less.

A film according to the present invention comprises the above-described olefin polymer.

A method for producing an olefin polymer according to the present invention comprises a step of polymerizing an olefin comprising propylene in the presence of a prepolymerized catalyst component (PI).

The prepolymerized catalyst component (PI) is obtained by polymerizing an olefin comprising propylene in the presence of a catalyst (I) for prepolymerization.

The catalyst (I) for prepolymerization is obtained by contacting a component (A1), a component (A2), a component (B) and a component (C).

Component (A1): an electron donor compound represented by formula (11)

$$R^1R^2Si(OR^3)(OR^4) \qquad (11)$$

In formula (11), $R^1$ to $R^4$ each independently represent an alkyl group having 1 to 20 carbon atoms, an aryl group having 1 to 20 carbon atoms, or an aralkyl group having 1 to 20 carbon atoms.

Component (A2): an electron donor compound represented by formula (12)

$$Si(OR^5)(OR^6)(OR^7)(OR^8) \qquad (12)$$

In formula (12), $R^5$ to $R^8$ each independently represent an alkyl group having 1 to 20 carbon atoms, an aryl group having 1 to 20 carbon atoms, or an aralkyl group having 1 to 20 carbon atoms.

Component (B): a solid catalyst component comprising titanium, magnesium, and a halogen

Component (C): a trialkylaluminum.

The method can further satisfy the following requirement (a) and requirement (b).

Requirement (a): the prepolymerized catalyst component (PI) is obtained by polymerizing the olefin in a mass of 2.5 to 14 based on a mass of the catalyst (I) for prepolymerization.

Requirement (b): the catalyst (I) for prepolymerization is obtained by contacting the component (A1), the component (A2), the component (B), and the component (C) in such a way that an amount of aluminum atoms in the component (C) is 5 to 12 moles per mole of titanium atoms in the component (B).

According to the present invention, an olefin polymer having excellent stretching properties and a method for producing an olefin polymer are provided.

## DETAILED DESCRIPTION

(Olefin Polymer)

An olefin polymer according to an embodiment of the present invention comprises a monomer unit derived from propylene and satisfies all of the following requirements (1) to (3).

$$(1)\ 0.5 \leq MFR \leq 7$$

The MFR represents a melt flow rate based on JIS K7210, the rate measured at 230°C and 21.18 N, and a unit thereof is g/10 min.

The MFR indicates a melt flow property of the olefin polymer. A large MFR indicates that a resin flows easily. The MFR may be 0.7 or more, or may be 1.0 or more. In addition, the MFR may be 5 or less, or may be 4 or less.

$$(2)\ 5.0 \leq Aw/An \leq 10.0$$

Aw and An represent a weight average molecular chain length and a number average molecular chain length, respectively, each measured by gel permeation chromatography. Large Aw/An means that the molecular distribution is large. Aw/An may be 6 or more, or may be 9 or less.

$$(3)\ SR \geq 0.1 \cdot \log(MFR) + 1.26$$

The SR is defined as follows assuming that a diameter of a die hole is Dh, and a diameter of a section of the olefin polymer extruded from the die hole is Dp in measurement of the MFR.

$$SR = Dp/Dh$$

The section of the extruded olefin polymer refers to a section perpendicular to the direction of extrusion of the extruded polymer, and in the case where the section does not have a perfectly circular shape, the section is defined by an average value of the maximum value and the minimum value of diameters of the section. The SR is called a die swell ratio or a Swelling ratio, and a large SR means that the elasticity of the polymer is large.

The olefin polymer can further satisfy the following requirement (4).

(4) An isotactic pentad fraction is 93% or more. The isotactic pentad fraction refers to an isotactic fraction in a pentad unit (unit in which five monomers are bonded) in the molecular chain of the polymer.

The olefin polymer can further be such that an amount of heat absorbed within a temperature range of 160 to 180°C, the amount measured with a differential scanning calorimeter, is 55 J/g or more, and a half-value width in a melting endotherm curve within a temperature range of 100°C to 180°C is 8°C or less. The half-value width can be 7°C or less.

The amount of heat absorbed within a temperature range of 160 to 180°C is determined by the following method. An aluminum pan, in which about 10 mg of a sample is filled, is (1) retained at 230°C for 5 minutes, and subsequently, (2) the temperature is decreased from 230°C to 40°C at a rate of 5°C/min, in a nitrogen atmosphere with a differential scanning calorimeter. Subsequently, the aluminum pan is (3) retained at 40°C for 5 minutes, and subsequently, (4) the temperature is increased from 40°C to 200°C at a rate of 5°C/min. A melting endotherm curve (x axis: Temperature, y axis: Heat Flow) obtained by measurement of the amount of heat in the process (4) is analyzed by the following method. A straight line connecting a point at 100°C and a point at 180°C on the melting endotherm curve is defined as a base line. The amount of heat absorbed within a temperature range of 160 to 180°C is determined from the area of a region surrounded by a straight line of x = 160°C, a straight line of x = 180°C, the melting endotherm curve within a temperature range of 160 to 180°C, and the base line.

The half-value width in the melting endotherm curve within a temperature range of 100°C to 180°C is determined by the following method. The temperature at which the heat flow reaches maximum in the melting endotherm curve obtained by the measurement of the amount of heat in the process (4) is defined as a melting point. The difference between the heat flow on the melting endotherm curve at the melting point and the heat flow on the base line at the melting point is assumed to be h. The difference between the heat flow on the melting endotherm curve and the heat flow on the base line is determined at each temperature to determine the maximum temperature and the minimum temperature where the difference is h/2 within a temperature range of 100°C to 180°C. The difference between the maximum temperature and the minimum temperature is defined as the half-value width.

The olefin polymer may be a polymer having a monomer unit derived from propylene.

Accordingly, the olefin polymer may be a homopolymer of propylene, may be a copolymer of propylene and an olefin other than propylene, or may be a mixture thereof. It is suitable that the olefin polymer has crystallinity.

The content of the monomer unit derived from propylene in the olefin polymer may be 85% by mass or more, 90% by mass or more, or 95% by mass or more based on the mass of the olefin polymer. The upper limit of the content of the monomer unit derived from propylene is 100% by mass.

The copolymerization monomer other than propylene, the monomer constituting the olefin polymer, may be, for example, ethylene and an $\alpha$-olefin. The $\alpha$-olefin may be an $\alpha$-olefin having 4 to 20 carbon atoms. Specific examples of the $\alpha$-olefin having 4 to 20 carbon atoms include butene-1, pentene-1, hexene-1, 4-methylpentene-1, heptene-1, octene-1, and decene-1. The $\alpha$-olefin having 4 to 20 carbon atoms may be at least one selected from the group consisting of butene-1, hexene-1, and octene-1.

Examples of the copolymer of propylene and ethylene and/or an $\alpha$-olefin having 4 to 20 carbon atoms include a propylene-ethylene copolymer, a propylene-butene-1 copolymer, a propylene-ethylene-butene-1 copolymer, a propylene-hexene-1 copolymer, and a propylene-ethylene-hexene-1 copolymer. The olefin polymer may be a propylene-ethylene copolymer, a propylene-butene-1 copolymer, or a propylene-ethylene-buten-1 copolymer.

The content of the monomer unit derived from a copolymerization monomer other than propylene in the olefin polymer may be more than 0% by mass and less than 15% by mass, and, from the viewpoint of rigidity, heat resistance, and the like of a molded body, may be less than 10% by mass, or less than 5% by mass based on the mass of the olefin copolymer. This content may be 0.01% by mass or more.

(Method for Producing Olefin Polymer)

Next, a method for producing an olefin polymer will be described.

(Preparation of Catalyst (I) for Prepolymerization)

A catalyst (I) for prepolymerization is first prepared. Specifically, the catalyst (I) for prepolymerization is obtained by contacting a component (A1), a component (A2), a component (B), and a component (C).

The component (A1) is an electron donor compound represented by formula (11).

$$R^1R^2Si(OR^3)(OR^4) \quad (11)$$

In formula (11), $R^1$ to $R^4$ each independently represent an alkyl group having 1 to 20 carbon atoms, an aryl group having 1 to 20 carbon atoms, or an aralkyl group having 1 to 20 carbon atoms.

Examples of the alkyl group include: straight-chain alkyl groups such as a methyl group, an ethyl group, a propyl group, a butyl group, and a pentyl group; branched chain alkyl groups such as an isopropyl group, a sec-butyl group, a tert-butyl group, and a tert-amyl group; and cycloalkyl groups such as a cyclopentyl group and a cyclohexyl group. Examples of the aryl group include a phenyl group and a tolyl group. Examples of the aralkyl group include a benzyl group, a phenylethyl group, a phenylpropyl group, a trityl group, a naphtylmethyl group, and a naphtylethyl group.

In each of $R^1$ to $R^4$, the number of carbon atoms can be made 10 or less.

Specific examples of the compound of formula (11) include diisopropyldimethoxysilane, diisobutyldimethoxysilane, di-tert-butyldimethoxysilane, tert-butylmethyldimethoxysilane, tert-butylethyldimethoxysilane, tert -butyl-normal-propyldimethoxysilane, tert-butyl-normal-butyldimethoxysilane, tert-amylmethyldimethoxysilane, tert-amylethyldimethoxysilane, tert-amyl-normal-propyldimethoxysilane, tert-amyl-normal-butyldimethoxysilane, isobutylisopropyldimethoxysilane, tert-butylisopropyldimethoxysilane, dicyclobutyldimethoxysilane, cyclobutylisopropyldimethoxysilane, cyclobutylisobutyldimethoxysilane, cyclobutyl-tert-butyldimethoxysilane, dicyclopentyldimethoxysilane, cyclopentylisopropyldimethoxysilane, cyclopentylisobutyldimethoxysilane, cyclopentyl-tert-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-tert-butyldimethoxysilane, cyclohexylcyclopentyldimethoxysilane, cyclohexylphenyldimethoxysilane, diphenyldimethoxysilane, phenyltrimethoxysilane, phenylmethyldimethoxysilane, phenylisopropyldimethoxysilane, phenylisobutyldimethoxysilane, phenyl-tert-butyldimethoxysilane, phenylcyclopentyldimethoxysilane, diisopropyldiethoxysilane, diisobutyldiethoxysilane, di-tert-butyldiethoxysilane, tert-butylmethyldiethoxysilane, tert-butylethyldiethoxysilane, tert-butyl-normal-propyldiethoxysilane, tert-butyl-normal-butyldiethoxysilane, tert-amylmethyldiethoxysilane, tert-amylethyldiethoxysilane, tert-amyl-normal-propyldiethoxysilane, tert-amyl-normal-butyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, and 2-norbornanemethyldimethoxysilane.

Examples of the preferred compound of formula (11) include diisopropyldimethoxysilane, tert-butylethyldimethoxysilane, tert-butyl-normal-propyldimethoxysilane, dicyclobutyldimethoxysilane, dicyclopentyldimethoxysilane, cycohexylmethyldimethoxysilane, cyclohexylethyldimethoxysilane, and diphenyldimethoxysilane.

The component (A2) is an electron donor compound represented by formula (12).

$$Si(OR^5)(OR^6)(OR^7)(OR^8) \quad (12)$$

In formula (12), $R^5$ to $R^8$ each independently represent an alkyl group having 1 to 20 carbon atoms, an aryl group having 1 to 20 carbon atoms, or an aralkyl group having 1 to 20 carbon atoms.

Examples of the alkyl group, the aryl group, and the aralkyl group are the same as the examples of the compound of formula (11). In each of $R^5$ to $R^8$, the number of carbon atoms can be made 10 or less.

Examples of the compound of formula (12) include tetraethoxysilane and tetramethoxysilane.

The component (B) is a solid catalyst component comprising titanium, magnesium, and a halogen. The component (B) may be a solid compound comprising titanium atoms, magnesium atoms, and halogen atoms.

Specifically, the component (B) can be obtained by, for example, the following method as described in Japanese Unexamined Patent Publication No. 2004-182876.

A titanium compound (a2) represented by formula [I] is reduced with an organomagnesium compound (a3) in the presence of an organosilicon compound (a1) having a Si-O bond to obtain a solid component. An ester compound (a4) may be co-existed at the time of the reduction. The solid component is washed with a solvent. After the solid component is washed, the solid component is heat-treated at a temperature of 50°C to 120°C for 30 minutes or more to obtain a solid product (a). The solid product (a) is subjected to a contact treatment with an organic acid halide (b) and a halogenated compound (c), or the solid product (a) is subjected to a contact treatment with an organic acid halide (b), a halogenated compound (c), and an electron donor (d).

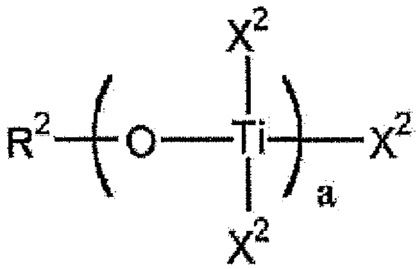

[ I ]

(Wherein, a represents a number of 1 to 20, R2 represents a hydrocarbon group having 1 to 20 carbon atoms. X2 represents a halogen atom or a hydrocarbon oxy group having 1 to 20 carbon atoms, and all the X2s may be the same or different.)

Examples of the organosilicon compound (a1) include tetraalkoxysilanes such as tetraethoxysilane.

Examples of the titanium compound (a2) include tetra-normal-butoxy titanium, tetra-normal-butyl titanium dimer, or tetra-normal-butyl titanium tetramer.

Examples of the organomagnesium compound (a3) include Grignard compounds such as butyl magnesium chloride; and dihydrocarbyl magnesium.

Examples of the ester compound include dialkyl esters of phthalic acid. The reduction reaction can be performed in an organic solvent such as a hydrocarbon or an ether.

Examples of the organic acid halide (b) include aromatic dicarboxylic dichlorides such as phthalic chloride.

Examples of the halogen compound (c) include tetrachlorotitanium, methyldichloroaluminum, ethyldichloroaluminum, tetrachlorosilane, phenyltrichlorosilane, methyltrichlorosilane, ethyltrichlorosilane, normal-propyltrichlorosilane, or tetrachlrotin.

Examples of the electron donor (d) include aromatic dicarboxylic acid ester compounds such as diisobutyl phthalate.

The component (C) is a trialkylaluminum.

Examples of the trialkylaluminum include trimethylaluminum, triethylaluminum, triisobutylaluminum, dimethylethylaluminum, dimethyl-normal-propylaluminum, dimethylisopropylaluminum, dimethyl-normal-butylaluminum, dimethylisobutylaluminum, dimethyl-normal-hexylaluminum, methyldiethylaluminum, methyl-di-normal-propylaluminum, methyldiisopropylaluminum, methyl-di-normal-butylaluminum, methyldiisobutylaluminum, and methyl-di-normal-hexyl aluminum. Among them, triethylaluminum is suitable.

There are no particular limitations in the method of contacting the components (A1), (A2), (B), and (C), and the method may be carried out by any measure as long as these are contacted. For example, the components (A1), (A2), (B), and (C) may be contacted in a state where these are diluted with a solvent, or the components (A1), (A2), (B), and (C) may be contacted in a state where these are not diluted with a solvent. Also, there are no particular limitations in the order of contacting the four components. For example, a plurality of components of the four components are contacted in advance, and the remaining component or components may thereafter be contacted with the first components; or the four components may be supplied simultaneously into a container to be contacted. It is preferable to make the atmosphere at the time of the contact an atmosphere of an inert gas, such as nitrogen or argon, in order to avoid an influence of moisture.

Examples of the solvent include hydrocarbon solvents, and specifically include: aliphatic hydrocarbons including propane, butane, pentane, hexane, heptane, octane, decane, dodecane, and kerosene; alicyclic hydrocarbons including cyclopentane, cyclohexane, methylcyclopentane, and methylcyclohexane; aromatic hydrocarbons including benzene, toluene, and xylene; and halogenated hydrocarbons including ethylene chloride, chlorobenzene, dichloromethane, trichloromethane, and tetrachloromethane; and mixtures thereof.

There are no particular limitations in the mixing ratio of the components (A1), (A2), (B), and (C).

The number of moles of the component (A2) assuming that the number of moles of the component (A1) is one can be made 0.01 to 100, preferably 0.1 to 20 moles, and more preferably 1 to 10 moles.

The total amount of the component (A1) and the component (A2) can be made 0.01 to 400 moles, preferably 0.02 to 200 moles, and more preferably 0.03 to 100 moles to 1 mole of the titanium atoms contained in the component (B).

The amount of the component (C) can be made such that the amount of the aluminum atoms in the component (C) is 0.5 to 700 moles per mole of the titanium atoms in the component (B), and it is preferable to make the amount of the component (C) such that the amount of the aluminum atoms in the component (C) be 5 to 12 moles per mole of the titanium atoms in the component (B). In this case, the catalyst activity in the main polymerization is enhanced.

Also, there are no particular limitations in the temperature and the pressure at the time of the contact, and the contact can be performed at -30 to 100°C at a pressure of 0 to 20 MPa by a gauge. The contact time can be made 1

minute to 300 minutes.

(Prepolymerization Step)

Next, an olefin comprising propylene is polymerized in the presence of the catalyst (I) for prepolymerization. Specifically, the olefin comprising propylene is prepolymerized in the presence of the catalyst (I) for prepolymerization to obtain a prepolymerized catalyst component (PI) comprising a polyolefin comprising propylene as a monomer unit and the catalyst (I) for prepolymerization. The prepolymerization may be performed in a batch-wise manner or continuously.

It is suitable to perform polymerization of the olefin comprising propylene in the presence of the catalyst (I) for prepolymerization and a solvent at the time of the prepolymerization. Examples of the solvent are the solvents given as examples in the description of the preparation of the catalyst (I) for prepolymerization.

It is possible to make the amount of the olefin to be supplied a mass of 0.01 to 1000, it is suitable to make the amount of the olefin to be supplied a mass of 0.5 or more, and it is more suitable to make the amount of the olefin to be supplied a mass of 2.5 to 14 assuming that the mass of the catalyst (I) for prepolymerization is one. In this case, the catalyst activity in the main polymerization is enhanced.

In the resultant prepolymerized catalyst component (PI), the mass of the polyolefin can be a mass of 0.01 to 1000, it is suitable that the mass of the polyolefin is 0.5 or more, and it is more suitable that the mass of the polyolefin is a mass of 2.5 to 14 assuming that the mass of the catalyst (I) for prepolymerization in PI is one.

The amount of propylene in the olefin to be supplied can appropriately be set according to the above-described amount of the monomer of propylene in the olefin polymer.

It is preferable that the slurry concentration in performing the prepolymerization be 1 to 500 g-solid catalyst component/litter-solvent, more preferably 3 to 300 g-solid catalyst component/litter-solvent. It is preferable that the prepolymerization temperature be -20 to 100°C, more preferably 0 to 80°C. In addition, it is preferable that the partial pressure of the olefin in a gas phase part during the prepolymerization be 1 kPa to 2 MPa, more preferably 10 kPa to 1 MPa, unless olefins are liquid at the pressure and the temperature in the prepolymerization. Further, there are no particular limitations in the prepolymerization time, and usually, the prepolymerization time of 2 minutes to 15 hours is suitable.

(Main Polymerization)

An olefin comprising propylene is polymerized in the presence of the prepolymerized catalyst component (PI) to obtain a polyolefin.

The polymerization of the olefin comprising propylene may be performed in the presence of the prepolymerized catalyst component (PI) and a solvent at the time of the main polymerization. Examples of the solvent are the solvents given as examples in the description of the preparation of the catalyst (I) for prepolymerization.

It is suitable to supply the component (A1), the component (A2), and the component (C) in addition to the prepolymerized catalyst component (PI) at the time of the main polymerization. It is to be noted that an aspect such that the component (A1), the component (A2), and the component (C) are supplied in the first half of the main polymerization, and the component (A1), the component (A2), and the component (C) are not supplied in the latter half of the main polymerization can be taken.

With respect to the ratio of the component (A1) and the component (A2) to be supplied at the time of the main polymerization, the number of moles of the component (A2) assuming that the number of moles of the component (A1) is one can be made 0.01 to 100, preferably 0.1 to 20 moles, and more preferably 1 to 10 moles. This ratio can be made the same ratio as the ratio at the time of the prepolymerization.

The total amount of the component (A1) and the component (A2) to be supplied at the time of the main polymerization can be made 0.01 to 400 moles, preferably 0.02 to 200 moles, and more preferably 0.03 to 100 moles per mole of the titanium atoms contained in the component (B) in the prepolymerized catalyst component (PI) to be supplied at the time of the main polymerization.

The amount of the component (C) to be supplied in the main polymerization can be made such that the amount of the aluminum atoms in the component (C) per mole of the titanium atoms in the component (B) in the prepolymerized catalyst component (PI) to be supplied at the time of the main polymerization is 0.5 to 700 moles, and it is preferable to make the amount of the component (C) to be supplied in the main polymerization such that the amount of the aluminum atoms in the component (C) per mole of the titanium atoms in the component (B) in the prepolymerized catalyst component (PI) to be supplied at the time of the main polymerization be 5 to 12 moles.

It is possible to make the amount of the olefin to be supplied in the main polymerization a mass of 2000 to 20000 assuming that the mass of the catalyst (I) for prepolymerization to be supplied at the time of the main polymerization is one.

The main polymerization can usually be performed at -30 to 300°C. It is preferable that the temperature in the main polymerization be 20 to 180°C. There are no limitations in the polymerization pressure, and a pressure of around normal pressure to around 10 MPa, preferably a pressure of around 200 kPa to around 5 MPa is generally adopted from the viewpoint of being industrial and economical. As a polymerization type, it is possible to perform the polymerization by any one of a batch type and a continuous type.
It is also possible to add a chain transfer agent such as hydrogen at the time of the polymerization in order to adjust the molecular weight of the polymer.
The amount of hydrogen at the time of the polymerization can be adjusted in order to adjust the molecular weight and MFR of the olefin polymer. There is a tendency that when the amount of hydrogen is made large, the molecular weight is made small, and the MFR is made large.
In the present embodiment, the component (A1) and the component (A2) are used together at least in the catalyst (I) for prepolymerization, and therefore it is easy to make Aw/An relatively large, and it is easy to make the SR large.
If necessary, a plurality of the olefin polymers may be mixed in order to adjust the MFR, Aw/An, and the SR.
When the solvent is removed from the slurry after the polymerization, a powder of the olefin polymer is obtained. If necessary, deactivation and/or decalcification of the catalyst may be performed.

(Polyolefin-based Resin Composition)

A polyolefin-based resin composition according to an embodiment of the present invention comprises the olefin polymer. Examples of components other than the olefin polymer in the polyolefin-based resin composition include an additive. The mass proportion of the olefin polymer in the polyolefin-based resin composition is preferably 90% or more, more preferably 92% or more, still more preferably 94% or more, still more preferably 96% or more, and still more preferably 98% or more.
Examples of the additive include an antioxidant, a neutralizing agent, a nucleating agent, an ultraviolet ray absorber, a lubricant, a flame retardant, and an antistatic agent.
The polyolefin-based resin composition may contain a pore-forming agent such as calcium carbonate.
It is preferable that the polyolefin-based resin composition satisfy all of the following requirements (1') to (3').

$$(1')\ 0.5 \leq \mathrm{MFR} \leq 7$$

The MFR represents a melt flow rate based on JIS K7210, the rate measured at 230°C and 21.18 N, and a unit thereof is g/10 min.
The MFR may be 0.7 or more, or may be 1.0 or more. In addition, the MFR may be 5 or less, or may be 4 or less.

$$(2')\ 5.0 \leq \mathrm{Aw/An} \leq 10.0$$

Aw and An represent a weight average molecular chain length and a number average molecular chain length, respectively, each measured by gel permeation chromatography. Aw/An may be 6 or more, or may be 9 or less.

$$(3')\ \mathrm{SR} \geq 0.1 \cdot \log(\mathrm{MFR}) + 1.26$$

The SR is defined as follows assuming that a diameter of a die hole is Dh, and a diameter of a section of the polyolefin-based resin composition extruded from the die hole is Dp in measurement of the MFR.

$$\mathrm{SR} = \mathrm{Dp/Dh}$$

The section of the extruded, polyolefin-based resin composition refers to a section perpendicular to the direction of extrusion of the extruded, polyolefin-based resin composition, and in the case where the section does not have a perfectly circular shape, the section is defined by an average value of the maximum value and the minimum value of diameters of the section.
The polyolefin-based resin composition can be such that an amount of heat absorbed within a temperature range of 160 to 180°C, the amount measured with a differential scanning calorimeter, is 55 J/g or more, and a half-value width in a melting endotherm curve within a temperature range of 100°C to 180°C is 8°C or less. The half-value width

can be 7°C or less.

The amount of heat absorbed within a temperature range of 160 to 180°C and the half-value width in the melting endotherm curve within a temperature range of 100°C to 180°C can be determined by the same methods as the methods for determining the amount of heat absorbed and the half-value width of the olefin polymer.

The polyolefin-based resin composition can have a pellet shape. In addition, the polyolefin-based resin composition may be molded into a film.

When a film comprising the olefin polymer according to the present embodiment is stretched, a microporous film or an unperforated film can be obtained. When the film comprising the olefin polymer according to the present embodiment is stretched, at least one of the following effects can be exhibited. The porosity of the stretched film can be made high. The film can be stretched uniformly. Heat shrinkage property of the stretched film can be lowered.

(Method for Producing Polyolefin-based Resin Composition)

The polyolefin-based resin composition according to an embodiment of the present invention can be produced by kneading the olefin polymer (a plurality of olefin polymers may be used) and an additive.

In the kneading, a kneading machine, such as a single- or twin-screw extruding machine, a Bunbury type mixer, plastmill, or a heat roll, can be used. When the resin composition after the kneading is pelletized by a known method, a pellet of the resin composition is obtained. It is desirable to mix respective raw materials uniformly with a mixing machine, such as a Henschel mixer or a tumbler, before performing the kneading.

(Method for Producing Microporous Film)

The microporous film is obtained by a method comprising:

the following raw film preparation step of subjecting the polyolefin-based resin composition to melt extrusion molding, thereby obtaining a raw film; and
the following stretching step of stretching the raw film, thereby obtaining a microporous film.

In the raw film preparation step, a film molding machine, such as an inflation molding machine, a cast molding machine provided with a T-die and a cooling roll, or a sheet molding machine provided with a T-die and a cooling roll, can be used.

In the case where the raw film is prepared using a cast molding machine or a sheet molding machine, the extruding temperature is usually set to 180°C to 250°C, and, from the viewpoint of the porosity of the microporous film, is preferably set to 180°C to 240°C, more preferably 190°C to 230°C.

In the case where the raw film is prepared using a cast molding machine or a sheet molding machine, the temperature of the cooling roll is usually set to 60°C to 160°C, and, from the viewpoint of the porosity of the microporous film, is preferably set to 80°C to 150°C.

From the viewpoint of the porosity of the microporous film, it is preferable to subject the obtained raw film to aging. The aging temperature is usually 80°C or more and 170°C or less, preferably 80°C or more and 160°C or less, and more preferably 80°C or more and 150°C or less. The aging time is usually 5 minutes or more, preferably 30 minutes or more, and more preferably 1 hour or more.

Examples of the method for stretching the raw film in the stretching step include a roll stretching method and a tenter stretching method. Uniaxial stretching using a roll stretching method is preferable. The stretching step usually comprises a cold stretching step of subjecting the raw film to cold stretching, thereby obtaining a cold-stretched film; and a warm stretching step of subjecting the cold-stretched film to warm stretching, thereby obtaining a microporous film. In the cold stretching step, a crack is allowed to occur between lamellas of the propylene polymer in the raw film, and subsequently in the warm stretching step, a vacancy can be formed by expanding the crack.

It is preferable to stretch the raw film in the cold stretching step uniaxially in the machine direction at the time of preparing the raw film, and, to stretch the cold-stretched raw film in the warm stretching step uniaxially in the same direction as the direction of stretching in the cold stretching step.

In the present specification, the cold stretching refers to stretching the raw film at a temperature of -20°C or more and less than 90°C. The stretching temperature in the cold stretching step is -20°C or more and less than 90°C, preferably 0°C or more and less than 50°C, and the stretching ratio is 1.05 times or more and 3.00 times or less, preferably 1.20 times or more and 2.00 times or less to the raw film in at least one direction.

In the present specification, the warm stretching refers to stretching the cold-stretched film at a temperature of 90°C or more and less than 160°C. The stretching temperature in the warm stretching step is 90°C or more and less than 160°C, and, from the viewpoint of the porosity of the microporous film, is preferably 110°C or more and less than 150°C, and the stretching ratio is preferably 1.05 times or more and 5.00 times or less, more preferably 2.00 times or

more and 4.00 times or less to the cold-stretched film.

The microporous film obtained in the stretching step may be thermally fixed. The thermally fixing temperature is preferably 80°C or more and less than 170°C, more preferably 120°C or more and less than 140°C. The fixing ratio of the film at the time of the thermal fixation is preferably 0.70 times or more and 1.00 times or less, more preferably 0.80 times or more and 1.00 times or less to the film after the warm stretching. The thermally fixing temperature is preferably 80°C or more from the viewpoint of the thermal shrinkage ratio, and is preferably less than 170°C from the viewpoint of the porosity.

(Method for Producing Unperforated Film)

The unperforated film is obtained by a method comprising:

the following raw film preparation step of subjecting the polyolefin-based resin composition to melt extrusion molding, thereby obtaining a raw film; and
the following stretching step of stretching the raw film, thereby obtaining an unperforated film.

In the raw film preparation step, a film molding machine, such as an inflation molding machine, a cast molding machine provided with a T-die and a cooling roll, or a sheet molding machine provided with a T-die and a cooling roll, can be used. A cast molding machine is preferable from the viewpoint of thickness accuracy.

In the case where the raw film is prepared using a cast molding machine or a sheet molding machine, the extruding temperature is usually set to 170°C to 300°C and is preferably set to 180°C to 260°C. The temperature of the cooling roll is usually set to 60°C to 160°C and is preferably set to 80°C to 150°C.

Examples of the stretching method in the stretching step include a uniaxial stretching method and a biaxial stretching method. The biaxial stretching method is preferable as the stretching method. Examples of the biaxial stretching method include a sequential biaxial stretching method and a simultaneous biaxial stretching method. Examples of the sequential biaxial stretching method include a tenter method and a tubular film method.

In the tenter method, the raw film is preheated as necessary, the film is thereafter stretched by 3 to 9 times in the machine direction (longitudinal direction) at a temperature of 120 to 160°C, and is stretched by 5 to 11 times in the direction (lateral direction) perpendicular to the machine direction at a temperature of 150 to 190°C. In addition, if necessary, thermal fixation can also be performed on the biaxially stretched film at 160 to 190°C.

(Use)

The microporous film comprising the olefin polymer according to the present embodiment can suitably be used as a separator for a battery such as a lithium ion secondary battery. The unperforated film comprising the olefin polymer according to the present embodiment can suitably be used as a dielectric for a capacitor.

EXAMPLES

The physical properties of olefin polymers and polyolefin-based resin compositions were measured according to the following methods.

(1) Melt Flow Rate (MFR, unit: g/10 min)

The melt flow rate of the olefin polymers and the polyolefin-based resin compositions was measured at a temperature of 230°C and at a load of 21.18 N according to the method specified in JIS K7210.

(2) Aw/An

The weight average molecular chain length (Aw) and the number average molecular chain length (An) were measured by gel permeation chromatography (GPC) under the following conditions to determine the ratio (Aw/An) of the weight average molecular chain length (Aw) to the number average molecular length (An).
Model: 150CV type (manufactured by Millipore Waters)
Column: Shodex M/S 80
Measurement temperature: 152°C
Solvent: ortho-dichlorobenzene
Sample concentration: 5 mg/8 mL

Calibration curves: calibration curves were made using standard polystyrene.

(3)SR

The SR was calculated by the following equation. Here, Dh represents a diameter of a die hole in a die to be used for the measurement of the MFR, the measurement specified in the above-described JIS K7210, and Dp represents a diameter of a section of the polymer extruded from this die hole.

$$SR = Dp/Dh$$

However, the section of the extruded polymer refers to a section perpendicular to the direction of extrusion of the extruded polymer, and in the case where the section does not have a perfectly circular shape, the section was defined by an average value of the maximum value and the minimum value of diameters of the section.

(4) Isotactic Pentad Fraction [mmmm]

The isotactic pentad fraction was quantitatively determined using a signal of carbon in a methyl group detected by $^{13}C$-NMR (EX-270 manufactured by Bruker Corporation). The measurement sample was dissolved in deuterated ortho-dichlorobenzene, and the measurement was conducted at 135°C.

(5) Amount of Heat Absorbed and Half-value Width

An aluminum pan, in which about 10 mg of a sample was filled, was (1) retained at 230°C for 5 minutes, and subsequently, (2) the temperature was decreased from 230°C to 40°C at a rate of 5°C/min, in a nitrogen atmosphere with a differential scanning calorimeter manufactured by PerkinElmer, Inc. Subsequently, the aluminum pan was (3) retained at 40°C for 5 minutes, and subsequently, (4) the temperature was increased from 40°C to 200°C at a rate of 5°C/min. A melting endotherm curve (x axis: Temperature, y axis: Heat Flow) obtained by the measurement of the amount of heat in the process (4) was analyzed by the following method. A straight line connecting a point at 100°C and a point at 180°C on the melting endotherm curve was defined as a base line. The amount of heat absorbed within a temperature range of 160 to 180°C was determined from the area of a region surrounded by a straight line of x = 160°C, a straight line of x = 180°C, the melting endotherm curve within a temperature range of 160°C to 180°C, and the base line.

The half-value width in the melting endotherm curve within a temperature range of 100°C to 180°C was determined by the following method. The temperature at which the heat flow reaches maximum in the melting endotherm curve obtained by the measurement of the amount of heat in the process (4) was defined as a melting point. The difference between the heat flow on the melting endotherm curve at the melting point and the heat flow on the base line at the melting point was assumed to be h. The difference between the heat flow on the melting endotherm curve and the heat flow on the base line was determined at each temperature to determine the maximum temperature and the minimum temperature where the difference was h/2 within a temperature range of 100°C to 180°C. The difference between the maximum temperature and the minimum temperature was defined as the half-value width.

The polyolefin-based resin compositions used in Examples and Comparative Examples were each processed into a microporous film according to the following method to evaluate the porosity.

(6) Microporous Film Processing

Each of the polyolefin-based resin compositions obtained in Examples 1 to 5 and Comparative Examples 1 to 4 was subjected to melt extrusion at a die temperature of 200°C using a T-die (die width of 600 mm, lip opening of 0.9 mm) processing machine.

Each of the polyolefin-based resin compositions obtained in Examples 12 to 15 and Comparative Example 8 was subjected to melt extrusion at a die temperature of 250°C using a T-die (die width of 200 mm, lip opening of 0.9 mm) processing machine.

Each extruded molten film of the polyolefin-based resin compositions obtained in Examples 1 to 5 and Comparative Examples 1 to 4 was cooled and solidified with a chill roll the cooling temperature of which was 90°C, the chill roll rotating at 50 m/min, to obtain a film having a thickness of 25 μm.

Each extruded molten film of the polyolefin-based resin compositions obtained in Examples 12 to 15 and Comparative Example 8 was cooled and solidified with a chill roll the cooling temperature of which was 80°C, the chill roll rotating at 10 m/min, to obtain a film having a thickness of 20 μm.

Each film was annealed at 150°C for 1 hour and was then cut into a square test piece having a size of 90 mm

in the direction of the flow of the resin at the time of the T-die processing and 90 mm in the direction orthogonal to the direction of the flow of the resin at the time of the T-die processing.

The cut-out test piece was attached to a tension tester with a thermostatic chamber (AGS-10kNG manufactured by Shimadzu Corporation) aligning the direction of the flow of the resin at the time of the T-die processing with the direction of drawing and setting the distance between chucks to 50 mm. The sample was subjected to cold stretching by 1.5 times at a stretching speed of 100 mm/min at room temperature, thereafter preheated at 130°C for 5 minutes while the stretching ratio was kept, and then subjected to warm stretching by 2 times at a stretching speed of 100 mm/min at 130°C. Further, thermal fixation was performed while keeping the stretching ratio for 1 minute to obtain a microporous film.

(7) Porosity

A square test piece having a size of 50 mm in the direction of uniaxial stretching and 50 mm in the direction orthogonal to the direction of uniaxial stretching was cut out from the microporous film obtained by the processing of (6). The thicknesses of arbitrary 9 points of this test piece were measured, and the arithmetic mean value thereof was defined as the thickness t (cm) of the test piece. Next, the weight W (g) of the test piece was measured to calculate the apparent density p, and the porosity P of the microporous film was calculated based on this apparent density p.

$$\text{Apparent density } \rho\ (g/cm^3) = W/(5 \times 5 \times t)$$

$$\text{Porosity } P\ (\%) = 100 \times (1 - \rho/0.9)$$

The stretchability of the polyolefin-based resin compositions used in Examples and Comparative Examples at the time of the stretch processing was evaluated according to the following method.

(8) Preparation of Sheet

Each of the polyolefin-based resin compositions obtained in Examples and Comparative Examples was extruded at a resin temperature of 200°C using a T-die (die width of 300 mm, lip opening of 2.3 mm) processing machine provided with an extruding machine having a screw diameter of 50 mm and solidified with a cooling roll of 90°C, thereby preparing a sheet of 350 μm.

(9) Uniform Stretchability

A square test piece having a size of 90 mm (longitudinal direction) in the direction of the flow of the resin at the time of the T-die processing and 90 mm in the direction (lateral direction) orthogonal to the direction of the flow of the resin at the time of the T-die processing was cut out from each of respective sheets obtained by the processing of (8). Marks were given at the positions of 21 mm, 29 mm, 37 mm, 45 mm, 53 mm, 61 mm, and 69 mm from the edge toward the lateral direction on the central part in the longitudinal direction. Sequential biaxial stretching was performed on each sample using the following stretching machine under the following conditions, and the distances between adjacent marks after the stretching were measured to determine relative standard deviation, thereby evaluating the uniform stretchability.
Stretching machine: biaxial stretching tester manufactured by Toyo Seiki Seisaku-sho, Ltd.
Preheating temperature: 155°C or 160°C
Preheating time: for 3 minutes
Stretching ratio: 5 times in longitudinal direction, 5 times in lateral direction
Stretching speed: 5 m/min

(10) Heat Shrinkage Ratio

A film having an A4 size was taken using the stretched film prepared under the processing conditions described in (9) in which the preheating temperature was set to 160°C in such a way that the long side was made to be in parallel with the longitudinal direction in (9), a reference line of 20 cm was drawn in the lateral direction on the central part of the film, and the film was hung in an oven in which the temperature was kept at 140°C and held for 15 minutes. Thereafter, the film was taken out and cooled at room temperature for 30 minutes, and the reference line length (cm) of the test piece was then measured. The heat shrinkage ratio was calculated from the following calculation formula.

$$\text{Heat shrinkage ratio (\%)} = \{(20 - \text{reference line length after heating})/20\} \times 100$$

A small heat shrinkage ratio indicates having excellent size stability at high temperatures.

(11) Maximum Stretching Ratio

A square test piece having a size of 90 mm (longitudinal direction) in the direction of the flow of the resin at the time of the T-die processing and 90 mm in the direction (lateral direction) orthogonal to the direction of the flow of the resin at the time of the T-die processing was cut out from each of respective sheets obtained by the processing of (8). Sequential biaxial stretching, in which stretching by 5 times in the longitudinal direction was performed, and stretching in the lateral direction was then performed using the following stretching machine under the following conditions, was performed on each sample. When the stretching was performed in the lateral direction, the maximum stretching ratio where rupture did not occur was measured.
Stretching machine: biaxial stretching tester manufactured by Toyo Seiki Seisaku-sho, Ltd.
Preheating temperature: 140°C, 145°C, 150°C, or 155°C
Preheating time: for 3 minutes
Stretching ratio: 5 times in longitudinal direction, 10 times at the maximum in lateral direction
Stretching speed: 5 m/min

[Example 1: Polypropylene-based Resin Composition PP-1]

Production of "Polypropylene Powder PP-A"

[Prepolymerization]

In an autoclave made of SUS, the autoclave having an inner volume of 3L and equipped with a stirrer, 1.5 L of normal hexane on which dehydration and deaeration treatments were performed sufficiently, 37.5 millimoles of triethylaluminum, 0.8 millimoles of tert-butyl-normal-propyldimethoxysilane, and 3.0 millimoles of tetraethoxysilane were placed. Prepolymerization was performed by adding therein 20 g of a solid catalyst component (containing 9.4 millimoles of titanium atoms) produced by the same method as in Example 1 of Japanese Unexamined Patent Publication No. 2004-182876, and supplying 20 g of propylene continuously over about 30 minutes while keeping the temperature in the autoclave at about 3 to about 10°C. Thereafter, the prepolymerized slurry was transferred into an autoclave made of SUS, the autoclave having an inner volume of 200 L and equipped with a stirrer, and 100 L of liquid butane was added thereto to make a slurry of a prepolymerized catalyst component.

The atomic ratio of Al/Ti is 4. The amount of the supplied olefin assuming that the mass of the catalyst (I) for prepolymerization is one is one.

[First Stage Propylene Polymerization (Liquid Phase Polymerization Reaction)]

Homopolymerization of propylene was performed using a vessel type reactor equipped with a stirrer, the reactor having an inner volume of 200 L. That is, propylene, hydrogen, triethylaluminum, tert-butyl-normal-propyldimethoxysilane, tetraethoxysilane, and the slurry of the prepolymerized catalyst component were supplied continuously into the reactor. The reaction conditions were as follows; the polymerization temperature: 70°C, the amount of propylene supplied: 30 kg/hour, the amount of hydrogen supplied: 15 NL/hour, the amount of triethylaluminum supplied: 40 millimoles/hour, the amount of tert-butyl-normal-propyldimethoxysilane supplied: 1.2 millimoles/hour, the amount of tetraethoxysilane supplied: 4.8 millimoles/hour, and the amount of the slurry of the prepolymerized catalyst component supplied (in terms of polymerized catalyst component): 1.2 g/hour. The MFR of a discharged polypropylene powder PP-A was 2.8 g/10 min.

In addition, the average residence time of the slurry in the reactor was 0.63 hours, the amount of the discharged polypropylene powder was 8.9 kg, and the amount of polypropylene produced per gram of the polymerized catalyst component was 7400 g.

"Polypropylene-based Resin Composition PP-1"

A pellet of a polypropylene-based resin composition PP-1 was obtained by melt-kneading 100 parts by weight of the polypropylene powder PP-A, 0.005 parts by weight of calcium stearate, 0.5 parts by weight of Irganox 1010

(manufactured by BASF SE, antioxidant), and 0.05 parts by weight of Irgafos 168 (manufactured by BASF SE, antioxidant).

[Example 2: Polypropylene-based Resin Composition PP-2]

Production of "Polypropylene Powder PP-B"

[Prepolymerization]

Production was performed to obtain a slurry of a prepolymerized catalyst component in the same manner as in the production of the "polypropylene powder PP-A."

[First Stage Propylene Polymerization (Liquid Phase Polymerization Reaction)]

Production was performed in the same manner as in the production of the "polypropylene powder PP-A" except the amount of hydrogen supplied: 7 NL/hour. The MFR of a discharged polypropylene powder PP-B was 1.5 g/10 min.

Production of "Polypropylene Powder PP-C"

[Prepolymerization]

Production was performed to obtain a slurry of a prepolymerized catalyst component in the same manner as in the production of the "polypropylene powder PP-A."

[First Stage Propylene Polymerization (Liquid Phase Polymerization Reaction)]

Production was performed in the same manner as in the production of the "polypropylene powder PP-A" except the amount of hydrogen supplied: 120 NL/hour. The MFR of a discharged polypropylene powder PP-C was 160 g/10 min.

"Polypropylene-based Resin Composition PP-2"

A pellet of a polypropylene-based resin composition PP-2 was obtained by melt-kneading 85 parts by weight of PP-B, 15 parts by weight of PP-C, 0.004 parts by weight of calcium stearate, and 0.5 parts by weight of Irganox 1010.

[Example 3: Polypropylene-based Resin Composition PP-3]

A pellet of a polypropylene-based resin composition PP-3 was obtained by melt-kneading 85 parts by weight of PP-B, 15 parts by weight of PP-C, 0.005 parts by weight of calcium stearate, 0.5 parts by weight of Irganox 1010, and 0.05 parts by weight of Irgafos 168.

[Example 4: Polypropylene-based Resin Composition PP-4]

A pellet PP-4 of a polypropylene-based resin composition was obtained by melt-kneading 90 parts by weight of PP-B, 10 parts by weight of PP-C, 0.005 parts by weight of calcium stearate, 0.5 parts by weight of Irganox 1010, and 0.05 parts by weight of Irgafos 168.

[Example 5: Polypropylene-based Resin Composition PP-5]

Production of "Polypropylene Powder PP-D"

[Prepolymerization]

Production was performed to obtain a slurry of a prepolymerized catalyst component in the same manner as in the production of "PP-A."

[First Stage Propylene Polymerization (Liquid Phase Polymerization Reaction)]

Production was performed in the same manner as in the production of "PP-A" except the amount of propylene

supplied: 20 kg/hour, the amount of hydrogen supplied: 3 NL/hour, the amount of triethylaluminum supplied: 24 millimoles/hour, the amount of tert-butyl-normal-propyldimethoxysilane supplied: 0.2 millimoles/hour, the amount of tetraethoxysilane supplied: 0.8 millimoles/hour, and the amount of the slurry of the prepolymerized catalyst component supplied (in terms of polymerized catalyst component): 0.4 g/hour.

[Second Stage Propylene Polymerization (Liquid Phase Polymerization Reaction)]

A slurry after the first stage propylene polymerization was transferred continuously into another vessel type reactor equipped with a stirrer, the reactor having an inner volume of 200 L, and homopolymerization of propylene was further performed. The reaction conditions were as follows; the polymerization temperature: 60°C, the amount of propylene supplied: 20 kg/hour, and the amount of hydrogen supplied: 90 NL/hour, and supplying triethylaluminum, tert-butyl-normal-propyldimethoxysilane, and tetraethoxysilane was not performed. The MFR of a discharged polypropylene powder PP-D was 2.9 g/10 min.

"Polypropylene-based Resin Composition PP-5"

A pellet of a polypropylene-based resin composition PP-5 was obtained by melt-kneading 100 parts by weight of PP-D, 0.005 parts by weight of calcium stearate, 0.15 parts by weight of Irganox 1010, and 0.05 parts by weight of Irgafos 168.

[Comparative Example 1: Polypropylene-based Resin Composition PP-6]

Production of "Polypropylene Powder PP-E"

[Prepolymerization]

Production was performed to make a slurry of a prepolymerized catalyst component in the same manner as in the production of "PP-A," except that tert-butyl-normal-propyldimethoxysilane and tetraethoxysilane were replaced with 3.75 millimoles of cyclohexylethyldimethoxysilane.

[First Stage Propylene Polymerization (Liquid Phase Polymerization Reaction)]

Production was performed in the same manner as in the production of "PP-D" except the amount of hydrogen supplied: 6 NL/hour, supplying 1.2 millimoles/hour of cyclohexylethyldimethoxysilane in place of tert-butyl-normal-propyldimethoxysilane and tetraethoxysilane, and the amount of hydrogen supplied: 10 NL/hour.

[Second Stage Propylene Polymerization (Liquid Phase Polymerization Reaction)]

Production was performed in the same manner as in the production of "PP-D" except the amount of hydrogen supplied of 10 NL/hour. The MFR of a discharged polypropylene powder PP-E was 2.4 g/10 min.

"Polypropylene-based Resin Composition PP-6"

A pellet of a polypropylene-based resin composition PP-6 was obtained by melt-kneading 100 parts by weight of PP-E, 0.008 parts by weight of calcium stearate, 0.15 parts by weight of Irganox 1010, and 0.05 parts by weight of Irgafos 168.

[Comparative Example 2: Polypropylene-based Resin Composition PP-7]

Production of "Polypropylene Powder PP-F"

[Prepolymerization]

Production was performed to make a slurry of a prepolymerized catalyst component in the same manner as in the production of the "polypropylene powder PP-E."

[First Stage Propylene Polymerization (Liquid Phase Polymerization Reaction)]

Production was performed in the same manner as in the production of "PP-E" except the amount of hydrogen supplied: 3 NL/hour.

[Second Stage Propylene Polymerization (Liquid Phase Polymerization Reaction)]

Production was performed in the same manner as in the production of "PP-E" except the amount of hydrogen supplied: 90 NL/hour. The MFR of a discharged polypropylene powder PP-F was 2.5 g/10 min.

"Polypropylene-based Resin Composition PP-7"

A pellet PP-7 of a polypropylene-based resin composition was obtained by melt-kneading 100 parts by weight of PP-F, 0.005 parts by weight of calcium stearate, 0.15 parts by weight of Irganox 1010, and 0.05 parts by weight of Irgafos 168.

[Comparative Example 3: Polypropylene-based Resin Composition PP-8]

Production of "Polypropylene Powder PP-G"

[Prepolymerization]

Production was performed to make a slurry of a prepolymerized catalyst component in the same manner as in the production of the "polypropylene powder PP-A," except that tert-butyl-normal-propyldimethoxysilane and tetraethoxysilane were replaced with 0.9 millimoles of normal-propylmethyldimethoxysilane.

[First Stage Propylene Polymerization (Liquid Phase Polymerization Reaction)]

Production was performed in the same manner as in the production of "PP-A" except the amount of propylene supplied: 55 kg/hour, the amount of hydrogen supplied: 16 NL/hour, the amount of triethylaluminum supplied: 40 millimoles/hour, the amount of tert-butyl-normal-propyldimethoxysilane supplied: 0.15 millimoles/hour, and the amount of normal-propylmethyldimethoxysilane in place of tetraethoxysilane supplied: 0.15 millimoles/hour. The MFR of a discharged polypropylene powder PP-G was 1.4 g/10 min.

Production of "Polypropylene Powder PP-H"

[Prepolymerization]

Production was performed to make a slurry of a prepolymerized catalyst component in the same manner as in the production of the "polypropylene powder PP-G."

[First Stage Propylene Polymerization (Liquid Phase Polymerization Reaction)]

Production was performed in the same manner as in the production of "PP-G" except the amount of hydrogen supplied: 42 NL/hour. The MFR of a discharged polypropylene powder PP-H was 4.7 g/10 min.

"Polypropylene-based Resin Composition PP-8"

A pellet of a polypropylene-based resin composition PP-8 was obtained by melt-kneading 40 parts by weight of PP-G, 60 parts by weight of PP-H, 0.005 parts by weight of calcium stearate, 0.15 parts by weight of Irganox 1010, and 0.05 parts by weight of Irgafos 168.

[Comparative Example 4: Polypropylene-based Resin Composition PP-9]

Production of "Polypropylene Powder PP-I"

[Prepolymerization]

Production was performed to make a slurry of a prepolymerized catalyst component in the same manner as in the production of the "polypropylene powder PP-G," except that 0.4 millimoles of tert-butyl-normal-propyldimethoxysilane and 1.5 millimoles of normal-propylmethyldimethoxysilane were used.

[First Stage Propylene Polymerization (Liquid Phase Polymerization Reaction)]

Production was performed in the same manner as in the production of "PP-G" except the amount of hydrogen supplied: 9 NL/hour, the amount of tert-butyl-normal-propyldimethoxysilane supplied: 0.05 millimoles/hour, and the amount of normal-propylmethyldimethoxysilane supplied: 0.20 millimoles/hour. The MFR of a discharged polypropylene powder PP-I was 2.3 g/10 min.

"Propylene-based Resin Composition PP-9"

A pellet of a polypropylene-based resin composition PP-9 was obtained by melt-kneading 100 parts by weight of PP-I, 0.005 parts by weight of calcium stearate, 0.15 parts by weight of Irganox 1010, and 0.05 parts by weight of Irgafos 168.

[Example 6: Propylene-based Resin Composition PP-10] Production of "Polypropylene Powder PP-J"

[Prepolymerization]

Production was performed to make a slurry of a prepolymerized catalyst component in the same manner as in the production of the "polypropylene powder PP-A."

[First Stage Propylene Polymerization (Liquid Phase Polymerization Reaction)]

Production was performed in the same manner as in the production of the "polypropylene powder PP-C" except the amount of hydrogen supplied: 4 NL/hour. The MFR of a discharged polypropylene powder PP-J was 1.6 g/10 min.

"Propylene-based Resin Composition PP-10"

A pellet of a polypropylene-based resin composition PP-10 was obtained by melt-kneading 90 parts by weight of PP-J, 10 parts by weight of PP-C, 0.004 parts by weight of calcium stearate, and 0.5 parts by weight of Irganox 1010.

[Example 7: Polypropylene-based Resin Composition PP-11]

"Polypropylene Powder PP-11"

A pellet of a polypropylene-based resin composition PP-11 was obtained by melt-kneading 100 parts by weight of PP-D, 0.004 parts by weight of calcium stearate, and 0.5 parts by weight of Irganox 1010.

[Comparative Example 5: Polypropylene-based Resin Composition PP-12]

Production of "Polypropylene Powder PP-K"

[Prepolymerization]

Production was performed to make a slurry of a prepolymerized catalyst component in the same manner as in the production of the "polypropylene powder PP-E."

[First Stage Propylene Polymerization (Liquid Phase Polymerization Reaction)]

Production was performed in the same manner as in the production of "PP-E" except the amount of hydrogen supplied: 7 NL/hour.

[Second Stage Propylene Polymerization (Liquid Phase Polymerization Reaction)]

Production was performed in the same manner as in the production of "PP-E" except the amount of hydrogen supplied: 14 NL/hour. The MFR of a discharged polypropylene powder PP-K was 3.0 g/10 min.

"Polypropylene-based Resin Composition PP-12"

A pellet of a polypropylene-based resin composition PP-12 was obtained by melt-kneading 100 parts by weight of PP-K, 0.004 parts by weight of calcium stearate, and 0.5 parts by weight of Irganox 1010.

[Comparative Example 6: Polypropylene-based Resin Composition PP-13]

Production of "Polypropylene Powder PP-L"

[Prepolymerization]

Production was performed to make a slurry of a prepolymerized catalyst component in the same manner as in the production of the "polypropylene powder PP-E."

[First Stage Propylene Polymerization (Liquid Phase Polymerization Reaction)]

Production was performed in the same manner as in the production of "PP-E" except the amount of hydrogen supplied: 5 NL/hour.

[Second Stage Propylene Polymerization (Liquid Phase Polymerization Reaction)]

Production was performed in the same manner as in the production of "PP-E" except the amount of hydrogen supplied of 90 NL/hour. The MFR of a discharged polypropylene powder PP-L was 3.5 g/10 min.

"Polypropylene-based Resin Composition PP-13"

A pellet of a polypropylene-based resin composition PP-13 was obtained by melt-kneading 100 parts by weight of PP-L, 0.004 parts by weight of calcium stearate, and 0.5 parts by weight of Irganox 1010.

[Comparative Example 7: Polypropylene-based Resin Composition PP-14]

Production of "Polypropylene Powder PP-M"

[Prepolymerization]

Production was performed to make a slurry of a prepolymerized catalyst component in the same manner as in the production of the "polypropylene powder PP-E," except that 1.9 millimoles of cyclohexylethyldimethoxysilane was used.

[First Stage Propylene Polymerization (Liquid Phase Polymerization Reaction)]

Production was performed in the same manner as in the production of "PP-E" except the amount of propylene supplied: 40 kg/hour, the amount of hydrogen supplied: 13 NL/hour, the amount of triethylaluminum supplied: 26 millimoles/hour, normal-propylmethyldimethoxysilane in place of cyclohexylethyldimethoxysilane: 0.2 millimoles/hour, and the amount of the slurry of the prepolymerized catalyst component supplied (in terms of polymerized catalyst component): 0.9 g/hour.

[Second Stage Propylene Polymerization (Liquid Phase Polymerization Reaction)]

Production was performed in the same manner as in the production of "PP-E" except the amount of propylene supplied: 35 kg/hour and the amount of hydrogen supplied of 11 NL/hour. The MFR of a discharged polypropylene powder PP-M was 2.9 g/10 min.

"Polypropylene-based Resin Composition PP-14"

A pellet of a polypropylene-based resin composition PP-14 was obtained by melt-kneading 100 parts by weight of PP-M, 0.004 parts by weight of calcium stearate, and 0.5 parts by weight of Irganox 1010.

[Example 8: Production of Polypropylene Powder PP-V]

[Prepolymerization]

Production was performed to make a slurry of a prepolymerized catalyst component in the same manner as in the production of the "polypropylene powder PP-A," except that 16 g of the solid catalyst component and 40 g of propylene were used.

[First Stage Propylene Polymerization (Liquid Phase Polymerization Reaction)]

Production was performed in the same manner as in the production of "PP-A." The MFR of a discharged polypropylene powder PP-V was 1.2 g/10 min. In addition, the average residence time of the slurry in the reactor was 0.62 hours, the amount of the discharged polypropylene powder was 12.5 kg, and the amount of polypropylene produced per gram of the polymerized catalyst component was 10400 g.

[Example 9: Production of Polypropylene Powder PP-W]

[Prepolymerization]

Production was performed to make a slurry of a prepolymerized catalyst component in the same manner as in the production of the "polypropylene powder PP-A," except that 11 g of the solid catalyst component and 55 g of propylene were used.

[First Stage Propylene Polymerization (Liquid Phase Polymerization Reaction)]

Production was performed in the same manner as in the production of "PP-A." The MFR of a discharged polypropylene powder PP-W was 3.2 g/10 min. In addition, the average residence time of the slurry in the reactor was 0.63 hours, the amount of the discharged polypropylene powder was 17.3 kg, and the amount of polypropylene produced per gram of the polymerized catalyst component was 14400 g.

[Example 10: Production of Polypropylene Powder PP-X]

[Prepolymerization]

Production was performed to make a slurry of a prepolymerized catalyst component in the same manner as in the production of the "polypropylene powder PP-A," except that 7 g of the solid catalyst component and 35 g of propylene were used.

[First Stage Propylene Polymerization (Liquid Phase Polymerization Reaction)]

Production was performed in the same manner as in the production of "PP-A." The MFR of a discharged polypropylene powder PP-X was 3.5 g/10 min. In addition, the average residence time of the slurry in the reactor was 0.60 hours, the amount of the discharged polypropylene powder was 18.1 kg, and the amount of polypropylene produced per gram of the polymerized catalyst component was 15100 g.

[Example 11: Production of Polypropylene Powder PP-Y]

[Prepolymerization]

Production was performed to make a slurry of a prepolymerized catalyst component in the same manner as in the production of the "polypropylene powder PP-A," except that 11 g of the solid catalyst component and 132 g of propylene were used.

[First Stage Propylene Polymerization (Liquid Phase Polymerization Reaction)]

Production was performed in the same manner as in the production of "PP-A." The MFR of a discharged polypropylene powder PP-Y was 2.8 g/10 min. In addition, the average residence time of the slurry in the reactor was 0.61 hours, the amount of the discharged polypropylene powder was 13.8 kg, and the amount of polypropylene produced per gram of the polymerized catalyst component was 11500 g.

[Example 12: Production of Polypropylene-based Resin Composition PP-15]

Production of "Polypropylene Powder PP-Z"

[Prepolymerization]

Production was performed to make a slurry of a prepolymerized catalyst component in the same manner as in the production of the "polypropylene powder PP-A," except that 16 g of the solid catalyst component and 40 g of propylene were used.

[First Stage Propylene Polymerization (Liquid Phase Polymerization Reaction)]

Production was performed in the same manner as in the production of the "polypropylene powder PP-A" except the amount of hydrogen supplied: 4.3 NL/hour and the amount of the slurry of the prepolymerized catalyst component supplied (in terms of polymerized catalyst component): 1.07 g/hour. The MFR of a discharged polypropylene powder PP-Z was 0.5 g/10 min. In addition, the average residence time of the slurry in the reactor was 0.64 hours, the amount of the discharged polypropylene powder was 9.5 kg, and the amount of polypropylene produced per gram of the polymerized catalyst component was 9000 g.

"Polypropylene-based Resin Composition PP-15"

A pellet of a polypropylene-based resin composition PP-15 was obtained by melt-kneading 100 parts by weight of the polypropylene powder PP-Z, 0.005 parts by weight of calcium stearate, 0.3 parts by weight of Irganox 1010, and 0.05 parts by weight of Irgafos 168.

[Example 13: Polypropylene-based Resin Composition PP-16]

Production of "Polypropylene Powder PP-AA"

[Prepolymerization]

Production was performed to make a slurry of a prepolymerized catalyst component in the same manner as in the production of the "polypropylene powder PP-Z."

[First Stage Propylene Polymerization (Liquid Phase Polymerization Reaction)]

Production was performed in the same manner as in the production of the "polypropylene powder PP-A" except the amount of hydrogen supplied: 2.0 NL/hour. The MFR of a discharged polypropylene powder PP-AA was 0.3 g/10 min.

Production of "Polypropylene Powder PP-AB"

[Prepolymerization]

Production was performed to make a slurry of a prepolymerized catalyst component in the same manner as in the production of the "polypropylene powder PP-Z."

[First Stage Propylene Polymerization (Liquid Phase Polymerization Reaction)]

Production was performed in the same manner as in the production of the "polypropylene powder PP-A" except the amount of hydrogen supplied: 102 NL/hour. The MFR of a discharged polypropylene powder PP-AB was 63 g/10 min.

"Polypropylene-based Resin Composition PP-16"

A pellet of a polypropylene-based resin composition PP-16 was obtained by melt-kneading 70 parts by weight of PP-AA, 30 parts by weight of PP-AB, 0.005 parts by weight of calcium stearate, 0.3 parts by weight of Irganox 1010, and 0.05 parts by weight of Irgafos 168.

[Example 14: Polypropylene-based Resin Composition PP-17]

"Polypropylene-based Resin Composition PP-17"

A pellet of a polypropylene-based resin composition PP-17 was obtained by melt-kneading 75 parts by weight of PP-AA, 25 parts by weight of PP-AB, 0.005 parts by weight of calcium stearate, 0.3 parts by weight of Irganox 1010, and 0.05 parts by weight of Irgafos 168.

[Example 15: Polypropylene-based Resin Composition PP-18]

"Polypropylene-based Resin Composition PP-18"

A pellet of a polypropylene-based resin composition PP-18 was obtained by melt-kneading 85 parts by weight of PP-Z, 15 parts by weight of PP-AB, 0.005 parts by weight of calcium stearate, 0.3 parts by weight of Irganox 1010, and 0.05 parts by weight of Irgafos 168.

[Comparative Example 8: Polypropylene-based Resin Composition PP-19]

Production of "Polypropylene Powder PP-AC"

[Prepolymerization]

Production was performed to make a slurry of a prepolymerized catalyst component in the same manner as in the production of the "polypropylene powder PP-E."

[First Stage Propylene Polymerization (Liquid Phase Polymerization Reaction)]

Production was performed in the same manner as in the production of the "polypropylene powder PP-E" except the amount of hydrogen supplied: 14 NL/hour. The MFR of a discharged polypropylene powder PP-AC was 0.5 g/10 min.

Production of "Polypropylene Powder PP-AD"

[Prepolymerization]

Production was performed to make a slurry of a prepolymerized catalyst component in the same manner as in the production of the "polypropylene powder PP-E."

[First Stage Propylene Polymerization (Liquid Phase Polymerization Reaction)]

Production was performed in the same manner as in the production of the "polypropylene powder PP-E" except

the amount of hydrogen supplied: 560 NL/hour. The MFR of a discharged polypropylene powder PP-AD was 327 g/10 min.

"Polypropylene-based Resin Composition PP-19"

A pellet of a polypropylene-based resin composition PP-19 was obtained by melt-kneading 85 parts by weight of PP-AC, 15 parts by weight of PP-AD, 0.005 parts by weight of calcium stearate, 0.3 parts by weight of Irganox 1010, and 0.05 parts by weight of Irgafos 168.

These results are in Table 1 to Table 4.

[Table 1]

| Table 1 | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Polypropylene-based composition | PP-1 | PP-2 | PP-3 | PP-4 | PP-5 | PP-6 | PP-7 | PP-8 | PP-9 |
| MFR (g/10 min) | 2.8 | 2.7 | 2.7 | 2.2 | 2.9 | 2.4 | 2.5 | 2.6 | 2.3 |
| Aw/An | 6.2 | 6.8 | 6.8 | 7.1 | 7.3 | 4.4 | 8.3 | 5.9 | 4.7 |
| SR | 1.37 | 1.41 | 1.41 | 1.39 | 1.42 | 1.24 | 1.29 | 1.29 | 1.28 |
| 0.1*log (MFR)+1.26 | 1.30 | 1.30 | 1.30 | 1.29 | 1.31 | 1.30 | 1.30 | 1.30 | 1.30 |
| [mmmm] | 0.973 | 0.969 | 0.969 | 0.969 | 0.964 | 0.979 | 0.979 | 0.948 | 0.923 |
| Amount of heat absorbed between 160 to 180°C (J/g) | 67 | 62.4 | 65.4 | 65.4 | 58.6 | 68.8 | 61.2 | 55.3 | 39.2 |
| Half-value width of melting endotherm curve (°C) | 5.72 | 5.8 | 5.88 | 5.88 | 5.94 | 4.8 | 5.12 | 7.18 | 8.78 |
| Porosity (%) | 24 | 28 | 35 | 32 | 42 | 7 | 9 | 7 | 7 |

[Table 2]

| Table 2 | Example 6 | Example 7 | Comparative Example 5 | Comparative Example 6 | Comparative Example 7 |
|---|---|---|---|---|---|
| Polypropylene-based composition | PP-10 | PP-11 | PP-12 | PP-13 | PP-14 |
| MFR (g/10 min) | 2.8 | 3.3 | 3.0 | 3.5 | 2.9 |
| Aw/An | 6.7 | 7.5 | 5.3 | 8.9 | 4.8 |
| SR | 1.37 | 1.42 | 1.23 | 1.29 | 1.27 |
| 0.1*log(MFR)+1.26 | 1.30 | 1.31 | 1.31 | 1.31 | 1.31 |
| [mmmm) | 0.977 | 0.964 | 0.979 | 0.980 | 0.942 |
| Amount of heat absorbed between 160 to 180°C (J/g) | 59.3 | 56.9 | 63.5 | 62.6 | 41.3 |
| Half-value width of melting endotherm curve (°C) | 6.59 | 3.93 | 5.86 | 5.25 | 9.97 |
| Relative standard deviation (%) Stretching temperature: 155°C | 26 | 26 | 37 | 33 | 17 |
| Relative standard deviation (%) Stretching temperature: 160°C | 15 | 19 | 15 | 21 | 32 |
| Heat shrinkage ratio (%) | 1.9 | 2.1 | 3.8 | 3.8 | 5.2 |

[Table 3]

| Table 3 | Example 12 | Example 13 | Example 14 | Example 15 | Comparative Example 8 |
|---|---|---|---|---|---|
| Polypropylene-based composition | PP-15 | PP-16 | PP-17 | PP-18 | PP-19 |
| MFR (g/10 min) | 0.6 | 1.1 | 0.9 | 1.0 | 0.9 |
| Aw/An | 6.1 | 9.3 | 8.4 | 7.8 | 5.8 |
| SR | 1.28 | 1.37 | 1.33 | 1.32 | 1.22 |
| 0.1 *log (MFR)+1.26 | 1.24 | 1.26 | 1.25 | 1.26 | 1.26 |
| [mmmm] | 0.955 | 0.955 | 0.958 | 0.957 | 0.972 |
| Amount of heat absorbed between 160 to 180°C (J/g) | 57.9 | 57.4 | 57.1 | 57.8 | 63.9 |
| Half-value width of melting endotherm curve (°C) | 6.29 | 6.08 | 6.37 | 6.33 | 5.36 |
| Porosity (%) | 44 | 43 | 44 | 43 | 37 |

[Table 4]

| Table 4 | Example 8 | Example 9 | Example 10 | Example 11 | Example 12 |
|---|---|---|---|---|---|
| Polypropylene Powder | PP-V | PP-W | PP-X | PP-Y | PP-Z |

(continued)

| Table 4 | Example 8 | Example 9 | Example 10 | Example 11 | Example 12 |
|---|---|---|---|---|---|
| MFR (g/10 min) | 1.2 | 3.2 | 3.5 | 2.8 | 0.5 |
| Aw/An | 6.4 | 5.5 | 6.2 | 6.8 | 6.1 |
| SR | 1.36 | 1.36 | 1.33 | 1.39 | 1.28 |
| 0.1*log (MFR)+ 1.26 | 1.27 | 1.31 | 1.31 | 1.30 | 1.24 |
| [mmmm] | 0.963 | 0.967 | 0.968 | 0.959 | 0.955 |
| Mass ratio of propylene to catalyst for prepolymerization in production of prepolymerized catalyst component | 2.5 | 5.0 | 5.0 | 12.0 | 2.5 |
| Ratio of number of aluminum atoms in component (C) to number of titanium atoms in component (B) in catalyst for prepolymerization | 5.0 | 7.0 | 10.0 | 7.0 | 5.0 |
| Amount of polypropylene produced per gram of polymerized catalyst component (g) | 10400 | 14400 | 15100 | 11500 | 9000 |

As shown in Table 1, Examples 1 to 5 had a larger porosity than Comparative Examples 1 to 4. As shown in Table 3, Examples 12 to 15 had a larger porosity than Comparative Example 8.

As shown in Table 2, Examples 6 and 7 each had a small relative standard deviation in both of the conditions in which the stretching temperature was 155°C and was 160°C and therefore had an excellent uniform stretchability, but Comparative Examples 5 to 7 each had a relative standard deviation exceeding 30% in either of the conditions in which the stretching temperature was 155°C and was 160°C and therefore had an inferior uniform stretchability. In addition, Examples 6 and 7 had a smaller heat shrinkage ratio and therefore had more excellent size stability at high temperatures than Comparative Examples 5 to 7.

As shown in Table 4, the catalyst activity of Examples 8 to 12 was higher than the catalyst activity in the production of the polypropylene powder PP-A.

## Claims

**1.** An olefin polymer comprising:

a monomer unit derived from propylene,
the polymer satisfying all of the following requirements (1) to (3):

$$(1)\ 0.5 \leq \mathrm{MFR} \leq 7$$

wherein the MFR represents a melt flow rate measured at 230°C and 21.18 N, and a unit thereof is g/10 min;

$$(2)\ 5.0 \leq \mathrm{Aw/An} \leq 10.0$$

wherein Aw and An represent a weight average molecular chain length and a number average molecular chain length, respectively, each measured by gel permeation chromatography,; and

$$(3)\ \mathrm{SR} \geq 0.1\cdot\log(\mathrm{MFR}) + 1.26$$

wherein the SR is defined as follows assuming that a diameter of a die hole is Dh, and a diameter of a section of the olefin polymer extruded from the die hole is Dp in measurement of the MFR,

$$SR = Dp/Dh.$$

**2.** The olefin polymer according to claim 1, further satisfying a requirement (4): (4) an isotactic pentad fraction is 93% or more.

**3.** The olefin polymer according to claim 1 or 2, wherein an amount of heat absorbed within a temperature range of 160 to 180°C, the amount measured with a differential scanning calorimeter, is 55 J/g or more, and a half-value width in a melting endotherm curve within a temperature range of 100°C to 180°C is 8°C or less.

**4.** A film comprising the olefin polymer according to any one of claims 1 to 3.

**5.** A method for producing an olefin polymer, the method comprising:

a step of polymerizing an olefin comprising propylene in the presence of a prepolymerized catalyst component (PI), wherein
the prepolymerized catalyst component (PI) is obtained by polymerizing an olefin comprising propylene in the presence of a catalyst (I) for prepolymerization, and
the catalyst (I) for prepolymerization is obtained by contacting a component (A1), a component (A2), a component (B) and a component (C), wherein
component (A1): an electron donor compound represented by formula (11),

$$R^1R^2Si(OR^3)(OR^4) \qquad (11)$$

wherein $R^1$ to $R^4$ each independently represent an alkyl group having 1 to 20 carbon atoms, an aryl group having 1 to 20 carbon atoms, or an aralkyl group having 1 to 20 carbon atoms,
component (A2): an electron donor compound represented by formula (12),

$$Si(OR^5)(OR^6)(OR^7)(OR^8) \qquad (12)$$

wherein $R^5$ to $R^8$ each independently represent an alkyl group having 1 to 20 carbon atoms, an aryl group having 1 to 20 carbon atoms, or an aralkyl group having 1 to 20 carbon atoms,
component (B): a solid catalyst component comprising titanium, magnesium, and a halogen, and
component (C): a trialkylaluminum.

**6.** The method for producing an olefin polymer according to claim 5, further satisfying the following requirement (a) and requirement (b):

requirement (a): the prepolymerized catalyst component (PI) is obtained by polymerizing the olefin in a mass of 2.5 to 14 based on a mass of the catalyst (I) for prepolymerization; and
requirement (b): the catalyst (I) for prepolymerization is obtained by contacting the component (A1), the component (A2), the component (B), and the component (C) in such a way that an amount of aluminum atoms in the component (C) is 5 to 12 moles per mole of titanium atoms in the component (B).

Europäisches Patentamt
European Patent Office
Office européen des brevets

# EUROPEAN SEARCH REPORT

Application Number
EP 19 21 6630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/025090 A1 (MORIYA SATORU [JP] ET AL) 27 September 2001 (2001-09-27) * paragraphs [0001], [0047], [0049], [0076], [0256], [0542] - [0549], [0586] - [0591]; claim 1; examples PP5, PP7 * ----- | 1-4 | INV. C08F110/06 |
| X | CN 103 540 020 A (CHINA PETROLEUM & CHEMICAL) 29 January 2014 (2014-01-29) * paragraphs [0001], [0018], [0019]; claims 1, 3 * ----- | 1-6 | |

TECHNICAL FIELDS SEARCHED (IPC)

C08F

The present search report has been drawn up for all claims

1

| Place of search | Date of completion of the search | Examiner |
|---|---|---|
| Munich | 5 May 2020 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 19 21 6630

This annex lists the patent family members relating to the patent documents cited in the above-mentioned European search report. The members are as contained in the European Patent Office EDP file on
The European Patent Office is in no way liable for these particulars which are merely given for the purpose of information.

05-05-2020

| Patent document cited in search report | Publication date | Patent family member(s) | Publication date |
|---|---|---|---|
| US 2001025090 A1 | 27-09-2001 | EP 2192623 A1<br>US 2001025090 A1 | 02-06-2010<br>27-09-2001 |
| CN 103540020 A | 29-01-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014065331 A
- JP 2004182876 A